# EUROPÄISCHE PATENTSCHRIFT

(11) **EP 1 679 466 B1**
(45) Veröffentlichungstag und Bekanntmachung des Hinweises auf die Patenterteilung: **09.05.2007**
(21) Anmeldenummer: 06000460.3
(22) Anmeldetag: 11.01.2006
(51) Int. Cl.: F16M 11/14, B25B 1/22

(54) **Universalhalter**
Universal support
Support universel

(30) Priorität: 11.01.2005 DE 102005001348; 11.01.2005 DE 202005000397 U
(43) Veröffentlichungstag der Anmeldung: 12.07.2006
(73) Patentinhaber: Reiling GmbH, 75203 Königsbach-Stein (DE)
(72) Erfinder: Reiling, Reinhold, D-75203 Königsbach-Stein (DE); Reiling, Karl, D-75203 Königsbach-Stein (DE)
(74) Vertreter: Leitner, Waldemar

(56) Entgegenhaltungen:
- DE-C1- 3 517 033
- DE-U1- 29 900 083
- US-A- 5 400 844
- US-B1- 6 254 044

## Beschreibung

Die Erfindung betrifft einen Universalhalter gemäß dem Oberbegriff des Anspruchs 1, der ein Basisteil mit einer Spanneinrichtung, insbesondere in Form einer an einem Werktisch befestigbaren Schraubzwinge, und eine Halterung für eine Bearbeitungsvorrichtung oder eine Bearbeitungsmaschine aufweist, wobei die Halterung ein in einer gewählten Stellung durch eine Arretiereinrichtung festlegbares Gelenkelement besitzt, das in einem Lager der Halterung aufgenommen ist.

Ein derartiger Universalhalter ist aus der DE 35 17 033 bekannt. Das Basisteil des bekannten Universalhalters ist als ein hohles Rohr mit einem rechteckigen Querschnitt ausgebildet. An einer oberen Fläche des Basisteils ist eine Lochung angebracht, durch welche die Halterung vom Innern des Basisteils aus durchsteckbar ist. Das Lager der Halterung weist an seinem unteren Ende einen umlaufenden Flansch auf, der im montierten Zustand an der Innenseite der oberen Fläche des Basisteils anschlägt und derart ein völliges Durchstecken der Halterung durch die Lochung des Basisteils verhindert. Im montierten Zustand der Halterung ist unter der Halterung die Arretiereinrichtung des Universalhalters angeordnet, welche eine von der Arretiereinrichtung verschiebbare Ringhülse aufweist, die in eine Öffnung des Lagers eintaucht und im gespannten Zustand das Gelenkelement beaufschlagt und derart arretiert. Hierzu wird die in dem Lager geführte Ringhülse von einer Exzenterwelle eines Hebels der Arretiereinrichtung beaufschlagt, die in den beiden Seitenflächen des Basisteils gelagert ist.

Der bekannte Universalhalter erlaubt zwar eine einfache, schnell zu bedienende und sicher zu handhabende Fixierung des Gelenkelements und überdies auch eine Feineinstellung im gewählten Winkel. Er erlaubt es aber nicht, die in die Lochung des Basisteils eingesetzte Halterung durch eine andere Halterung auszuwechseln, da hierzu eine vollkommene Demontage der Arretiereinrichtung erforderlich ist, damit die Halterung aus der Lochung herausgenommen werden kann. Ein "Auswechseln" der Halterung kommt daher bezüglich des dabei entstehenden Arbeitsaufwands einer Neuzusammenstellung des Universalhalters gleich.

In jüngerer Zeit ist aber verstärkt das Bedürfnis aufgetreten, die im Basisteil des Universalhalters aufgenommene Halterung durch eine andere Halterung zu ersetzen, um die Halterung besser der jeweils zu verwendenden Bearbeitungsvorrichtung oder Bearbeitungsmaschine anpassen zu können.

Aus der DE 299 00 083 U1 ist ein Universalhlater bekannt, der eine C-förmige Schelle mit einem Klemmstück aufweist, welches mit einem gegenüberliegenden feststehenden Teil ein Klemmaul ausbildet. Aus der Schelle erstreckt sich ein Rohr nach oben, das am Ende eine Kugel aufnimmt und einen radialen Teil aufweist. Ein Aufsatz besitzt einen weiteren radialen Teil und kann die Kugel einschränken. Der Aufsatz weist weiterhin ein Schraubenloch und eine Schraube auf, die durch ein Loch der Rohrs hindurchgehen kann, wodurch die Kugel blokkiert oder gelöst werden kann. Durch zwei Befestigungsteile können die beiden vorgenannten radialen Teile zusammengeschraubt werden. Auch dieser bekannte Universalhalter besitzt den Nachteil, dass es nicht mehr möglich ist, die von ihm aufgenommene Halterung durch eine andere Halterung zu ersetzen, ohne dass der bekannte Universalhalter fast vollständig demontiert werden muss.

Es ist daher Aufgabe der vorliegenden Erfindung, einen Universalhalter der eingangs genannten Art derart weiterzubilden, dass in einfacher Art und Weise ein Auswechseln von Halterungen für Bearbeitungsvorrichtungen oder Bearbeitungsmaschinen möglich ist.

Diese Aufgabe wird erfindungsgemäß dadurch gelöst, dass das Basisteil ein auf seiner Oberseite angeordnetes Führungselement für die Halterung aufweist, in welches die Halterung auswechselbar einsetzbar ist, wobei im eingesetzten Zustand das Gelenkelement der Halterung über der Oberfläche des Basisteils angeordnet ist, dass die Arretiereinrichtung ein mit dem Gelenkelement der Halterung zusammenwirkendes Gegenlager aufweist, das durch ein Betätigungselement in oder über die Oberfläche des Basisteils bewegbar und in Wirkkontakt mit dem Gelenkelement bringbar ist.

Durch die erfindungsgemäßen Maßnahmen wird in vorteilhafter Art und Weise ein Universalhalter geschaffen, der sich dadurch auszeichnet, dass in ihm in besonders einfacher Art und Weise unterschiedliche Halterung einsetzbar sind: Das erfindungsmäß auf der Oberseite des Basisteils angeordneten Führungselement erlaubt in vorteilhafter Art und Weise ein einfaches Auswechseln der Halterungen des Universalhalters, ohne dass man - wie beim bekannten Universalhalter - gezwungen ist, vor dem Austausch der Halterung auch die Arretiereinrichtung zu demontieren. Die erfindungsgemäße Ausgestaltung des Universalhalters erlaubt es, dass die Halterung nun von außen, also nicht mehr - wie bei dem bekannten Universalhalter - von der Innenseite des Basisteils her - in diesen eingesetzt werden kann. Hierzu ist es vorteilhaft, dass gemäß einer vorteilhaften Weiterbildung der Erfindung das Führungselement Führungsnuten aufweist, in welche die Halterung einschiebbar ist.

Weitere vorteilhafte Weiterbildungen der Erfindungen sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen:
- Figur 1:: eine Seitenansicht eines Ausführungsbeispiels eines Universalhalters,
- Figur 2:: eine Ansicht des Ausführungsbeispiels aus der Richtung II der Figur 1,
- Figur 3:: ein Schnitt durch das Ausführungsbeispiel der Figuren 1 und 2,
- Figur 4:: das Ausführungsbeispiel der Figuren 1 und 2 in einer unterschiedlichen Position einer Halterung,
- Figur 5:: eine Ansicht des Ausführungsbeispiels der Figur 3 aus Richtung IV der Figur 3,
- Figur 6:: eine Draufsicht auf das Ausführungsbeispiel (Halterung nicht gezeigt) und
- Figur 7:: eine Ansicht des Ausführungsbeispiels aus der Richtung VII der Figur 5, und

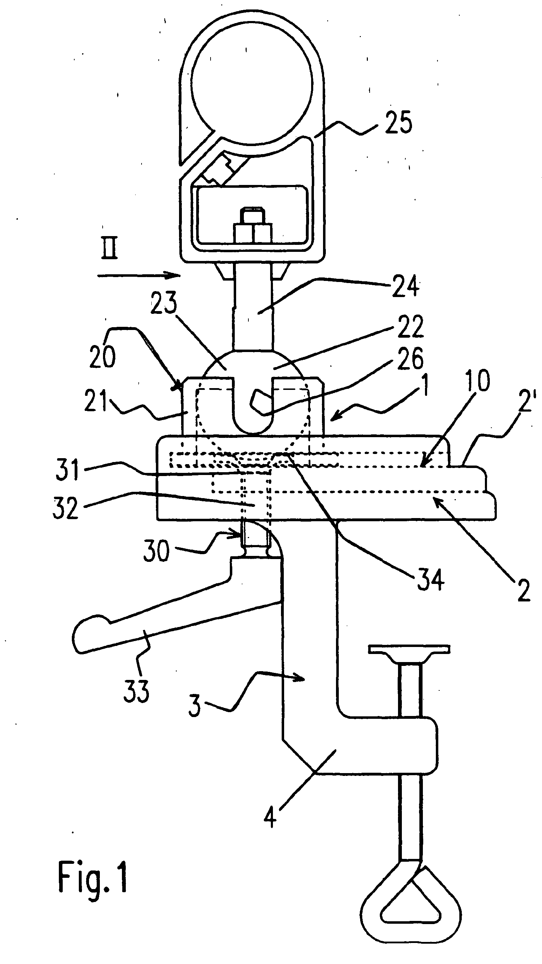

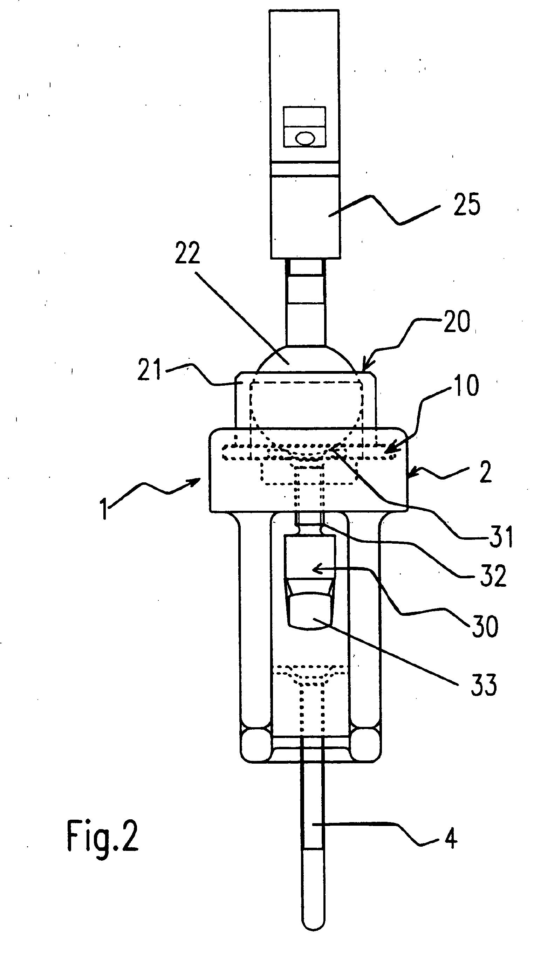

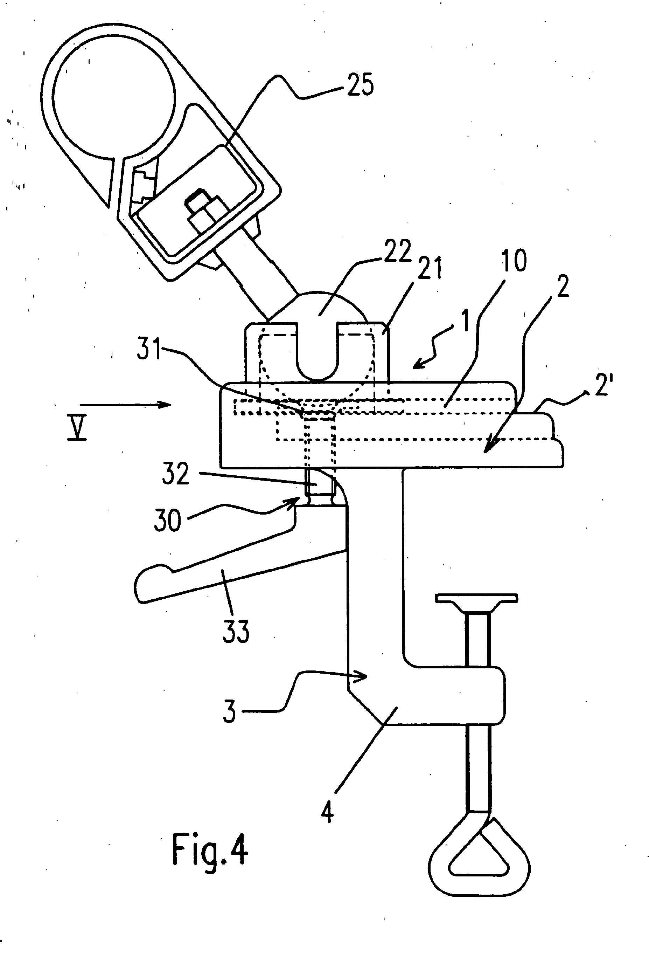

Der in den Figuren 1 - 7 dargestellte, allgemein mit 1 bezeichnete Universalhalter weist ein Basisteil 2 auf, welches mit einer geeigneten Spanneinrichtung 3, die im hier gezeigten Fall als eine Schraubzwinge 4 ausgebildet ist, auf einem nicht dargestellten Werktisch montierbar ist. In ein weiter unten noch näher beschriebenes Führungselement 10 ist eine Halterung 20 für eine Bearbeitungsvorrichtung oder Bearbeitungsmaschine eingesetzt, die ein Lager 21 für ein Gelenkelement 22 aufweist. Das im hier gezeigten Fall als Kugelgelenk 23 ausgebildete Gelenkelement 22 weist einen Tragstutzen 24 für einen nicht näher beschriebenen Hälter 25 auf, in dem die vom Universalhalter 1 zu haltende Bearbeitungsvorrichtung oder Bearbeitungsmaschine einsetzbar ist. Das Lager 21 für das Gelenkelement 22 weist eine seitliche Austrittsöffnung 26 für den Tragstutzen 24 auf, so dass der Tragstutzen 24 bis zu 90° verschwenkt werden kann.

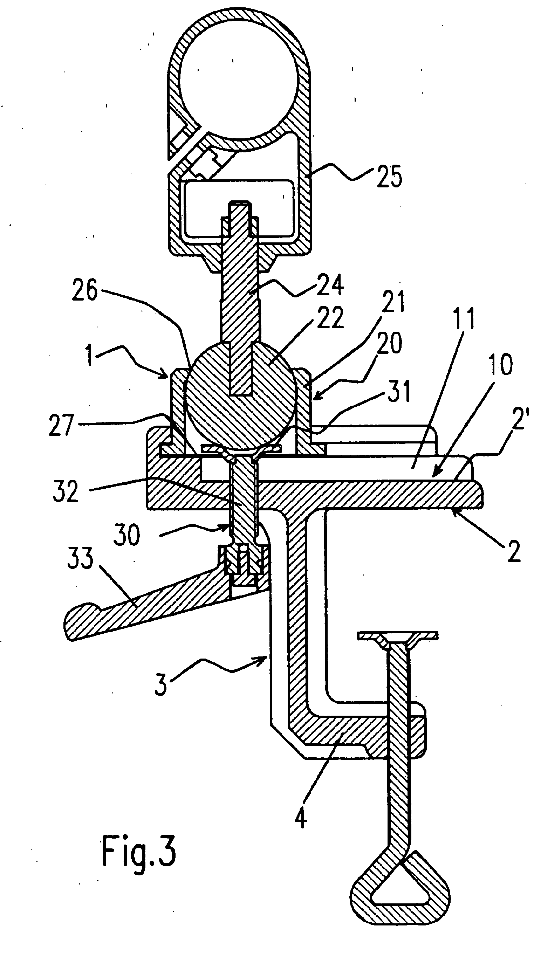

Im Basisteil 2 ist eine Arretiereinrichtung 30 angeordnet, die ein das Gelenkelement 22 der Halterung 20 beaufschlagendes Gegenlager 31 aufweist, welches von einem drehbar im Basisteil 2 angeordneten Spannbolzen 32 beaufschlagt wird, so dass durch eine entsprechende Betätigungsbewegung eines drehfest mit dem Spannbolzen 32 verbundenen Spannhebels 33 das Gelenkelement 22 mit einer Spannkraft beaufschlagt werden kann, wodurch das Gelenkelement 22 gegen eine Lagerfläche 26 (siehe Figur 3) des Lagers 21 der Halterung 20 gedrückt wird und derart das Gelenkelement 22 in einer gewählten Position lagefixiert wird. Durch die Betätigungsbewegung des Spannhebels 33 der Arretiereinrichtung 30 wird das Gegenlager 31 über die Oberfläche 2' des Basisteils 2 hinaus bewegt, tritt durch eine Öffnung 27 (siehe Figur 3) des Lagers 21 in die Halterung 20 ein und beaufschlagt dann das Gelenkelement 22. Durch eine entgegengesetzt verlaufende Betätigungsbewegung des Spannhebels 33 wird zum Lösen der wie vorstehend beschrieben bewirkten Arretierung des Gelenkelements 22 das Gegenlager 31 in die entgegengesetzte Richtung bewegt und tritt durch die Öffnung 27 des Lagers 21 aus der Halterung 20 aus.

Die hier beschriebene Ausbildung der Arretiereinrichtung 30 besitzt nun den Vorteil, dass die Arretiereinrichtung 30 für die Halterung 10 nurmehr insoweit auf diese abgestimmt sein muß, als dass das Gegenlager 31 das Gelenkelement 22 beaufschlagen können muß. Dies ist im diametralen Gegensatz zu dem eingangs beschriebenen, bekannten Universalhalter, bei dem das Lager der Halterung gleichzeitig eine Führungsfunktion für das Gegenlager bewirken mußte, so dass bei dem bekannten Universalhalter eine bauliche Koppelung zwischen Halterung und Arretiereinrichtung gegeben war, die bei dem beschriebenen Universalhalter 1 nun in vorteilhafter Art und Weise nicht mehr auftritt. Die Arretiereinrichtung 30 ist hier unabhängig von der Halterung 10 funktionsfähig.

Hierbei wird bevorzugt, dass das Gegenlager 31 als eine Spannkalotte 34 ausgebildet ist, welche das Kugelgelenk 23 großflächig beaufschlagt und derart eine hohe Spannkraft auf das Kugelelement 23 aufbringt. Es ist natürlich auch möglich, das Gegenlager 31 als einen Spannring oder ein ähnliches Spannelement auszubilden.

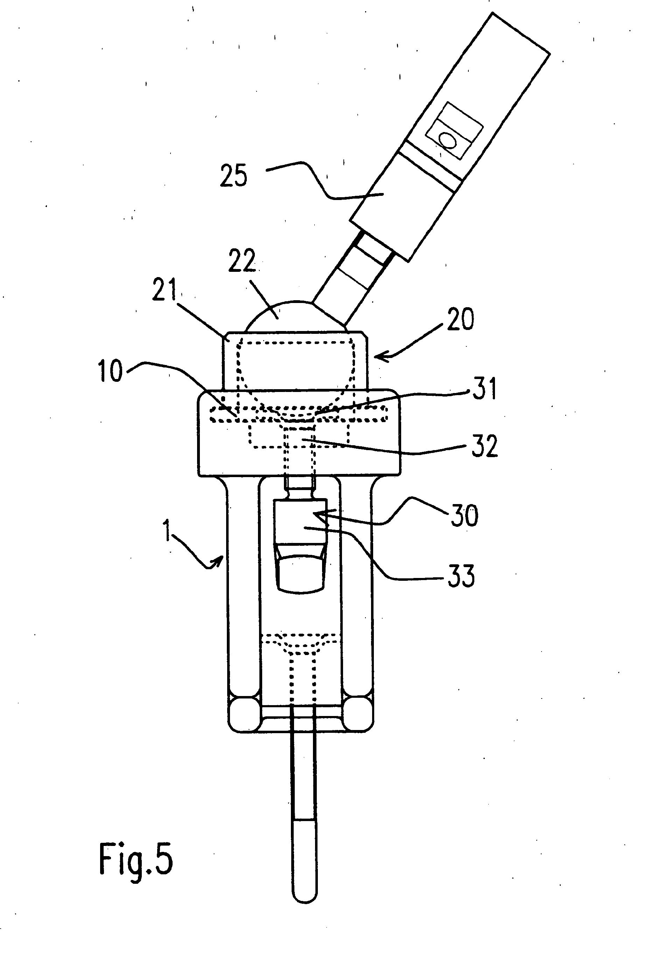

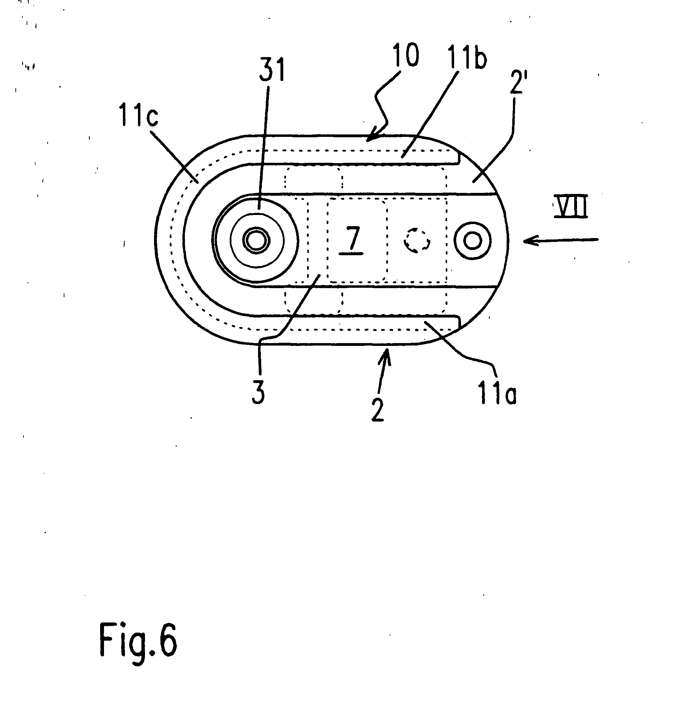

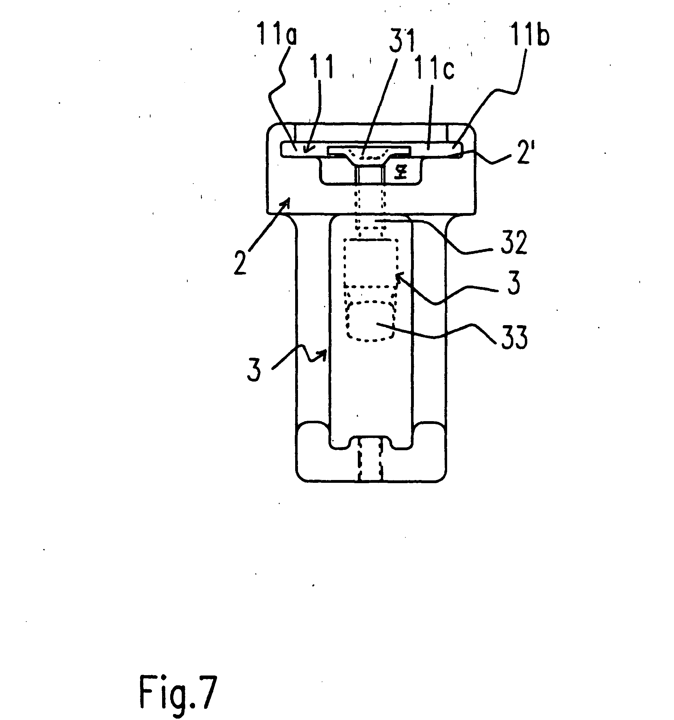

Die Ausgestaltung des Führungselements 10 des Basisteils 2 ist nun aus den Figuren 6 und 7 ersichtlich. Wie diesen Figuren zu entnehmen ist, ist an der Oberseite 2' des Basisteils 2 das Führungselement 10 für die in die Figuren 5 und 6 nicht gezeigte Halterung 20 angeordnet, wobei eine Ausführungsform dieser Halterung 20 in Figur 3 dargestellt ist. Im hier gezeigten Fall ist das Führungselement 10 integral mit dem Basisteil 2 ausgebildet. Es ist aber auch denkbar, dass das Führungselement 10 als ein separates Bauteil auf die Oberseite 2' des Basisteils 2 aufgesetzt ist.

Das Führungselement 10 weist im hier gezeigten Fall zwei Führungsnuten 11a und 11b auf, welche vorzugsweise durch eine weitere, hier bogenförmige Nut 11c zu einer umlaufenden Führungsnut 11 ergänzt werden. Die Führungsnut 11 wirkt mit einem entsprechenden Führungselement 27 der Halterung 20 zusammen: Die Halterung 20 wird in einer auf die Zeichenebene der Figur 6 orthogonalen Richtung in die Führungsnut 11 eingeschoben und über das Gegenlager 31 der Arretiereinrichtung 30 bewegt, so dass durch eine entsprechende Betätigung des Betätigungselements 33 das Gegenlager 31 in Wirkkontakt mit dem Gelenkelement 22 gebracht und derart das Gelenkelement 22 in einer festgelegten Stellung lagefixiert werden kann. Hierbei wird bevorzugt, dass die weitere Führungsnut 11c der Führungsnut 11 einen Anschlag für die Halterung 20 ausbildet.

Ein Auswechseln der Halterung 20 ist nun in einfacher Art und Weise dadurch möglich, dass durch eine entsprechende Betätigungsbewegung des Betätigungselements 33 das Gegenlager 31 der Arretiereinrichtung 30 vom Gelenkelement 22 wegbewegt wird, so dass der Wirkeingriff zwischen der Halterung 20 und der Arretiereinrichtung 30 aufgehoben wird. Die Halterung 20 kann dann einfach durch ein Verschieben aus dem Führungselement 10 und somit aus dem Universalhalter 1 bewegt werden.

Wie aus den Figuren 6 und 7 des weiteren noch entnehmbar ist, wird bevorzugt, dass in der Oberfläche 2' des Basisteils 2 eine Ausnehmung 7 vorgesehen ist, in der das Gegenlager 31 der Arretiereinrichtung 30 aufgenommen ist. Eine derartige Maßnahme besitzt den Vorteil, dass hierdurch eine geringere Bauhöhe des Basisteils 2 des Universalhalters 1 ermöglicht wird.

## Patentansprüche

1. Universalhalter, der ein Basisteil (2) mit einer Spanneinrichtung (3), insbesondere in Form einer an einem Werktisch befestigbaren Schraubzwinge (4), und eine Halterung (20) für eine Bearbeitungsvorrichtung oder eine Bearbeitungsmaschine aufweist, wobei die Halterung (20) ein in einer gewählten Stellung durch eine Arretiereinrichtung (30) festlegbares Gelenkelement (22) besitzt, das in einem Lager (21) der Halterung (20) aufgenommen ist, **dadurch gekennzeichnet, dass** das Basisteil (2) ein auf seiner Oberseite (2') angeordnetes Führungselement (10) für die Halterung (20) aufweist, in welches die Halterung auswechselbar einsetzbar ist, wobei im eingesetzten Zustand das Gelenkelement (22) der Halterung (20) über der Oberfläche (2') des Basisteils (2) angeordnet ist, dass die Arretiereinrichtung (30) ein mit dem Gelenkelement (22) der Halterung (20) zusammenwirkendes Gegenlager (31) aufweist, das durch ein Betätigungselement (33) in oder über die Oberfläche (2') des Basisteils (2) bewegbar und in Wirkkontakt mit dem Gelenkelement (22) bringbar ist.

2. Universalhalter nach Anspruch 1, **dadurch gekennzeichnet, dass** im Führungselement (10) des Basisteils (2) ein Führungselement (27) der Halterung (20) aufnehmbar ist.

3. Universalhalter nach einem der vorangehenden Ansprüche, **dadurch gekennzeichnet, dass** das Führungselement (10) eine Führungsnut (11) aufweist.

4. Universalhalter nach Anspruch 3, **dadurch gekennzeichnet, dass** in die Führungsnut (11) des Basisteils (2) das Führungselement (27) der Halterung (20) einschiebbar ist.

5. Universalhalter nach einem der vorangehenden Ansprüche, **dadurch gekennzeichnet, dass** das Führungselement (10) durch zwei im wesentlichen parallel verlaufende Führungsnuten (11a, 11b) und vorzugsweise eine weitere, bogenförmig ausgebildete und die beiden Führungsnuten (11a, 11b) verbindende weitere Führungsnut (11c) aufweist.

6. Universalhalter nach einem der vorangehenden Ansprüche, **dadurch gekennzeichnet, dass** die Arretiereinrichtung (30) einen das Basisteil (2) durchsetzenden Spannbolzen (32) aufweist, und dass der Spannbolzen (32) an seinem oberen Ende das Gegenlager (31) und an seinem unteren Ende das Betätigungselement (33) trägt.

7. Universalhalter nach einem der vorangehenden Ansprüche, **dadurch gekennzeichnet, dass** das Gelenkelement (22) als Kugelgelenk (23) und das Gegenlager (31) als Spannkalotte (34) ausgebildet ist.

## Claims

1. Universal support compring a base part (2) with a clamping device (3), in particular in form of a screw clamp (4) being affixable to a work table, and a holding device (20) for a working device or a working machine, wherein the holding device (20) has an articulation element (22) being fixable in a selected position by a locking device (30), the articulation element (22) being accommodated in a bearing (21) of the holding device (20), **characterised in that** the base part (2) comprises at its upper surface a guidance element (10) for the holding device (20), into which guidance element (10) the holding device (20) is exchangeably insertable, wherein in the mounted state the articulation element (22) of the holding device (20) is disposed above the surface (2') of the base part (2), that the locking device (30) comprises a counter bearing (31) cooperating with the articulation element (22) of the holding device (20), which counter bearing (31) can be moved in or along the surface (2') of the base part (2) by an operation element (33) and can be brought into operative contact with the articulation element (22).

2. Universal support according to claim 1, **characterized in that** in the guidance element (10) of the base part (2) a guidance element (27) of the holding device (20) can be accommodated.

3. Universal support according to one of the preceding claims, **characterized in that** the guidance element (10) comprises a guidance groove (11).

4. Universal support according to claim 3, **characterized in that** the guidance element (27) of the holding device (20) is slideable into the guidance groove (11) of the base part (2).

5. Universal support according to one of the preceding claims, **characterized in that** the guidance element (10) comprises two guidance grooves (11a, 11b) running essentially parallel and preferably one further guidance groove (11c) being curve-shaped and connecting the two guidance grooves (11a, 11b).

6. Universal support according to one of the preceding claims, **characterized in that** the locking device (30) comprises a clamping bolt (32) penetrating the base part (2), and that the clamping bolt (32) bears the counter bearing (31) at its upper end and the operation element (33) at its lower end.

7. Universal support according to one of the preceding claims, **characterized in that** the articulation element (22) is designed as a spherical joint (23) and the counter bearing (31) is designed as a clamping calotte (34).

## Revendications

1. - Support universel, qui présente une partie de base (2) avec un dispositif de serrage (3), en particulier sous la forme d'un serre-joint à serrer par vis (4) fixable sur un établi, et une attache (20) pour un dispositif d'usinage ou une machine d'usinage, l'attache (20) présentant un élément d'articulation (22) pouvant être fixé dans une position choisie par un dispositif d'arrêt (30), lequel est réceptionné dans un palier (21) de l'attache (20), **caractérisé en ce que** la partie de base (2) présente un élément de guidage (10) disposé sur son côté supérieur (2') pour l'attache (20), élément dans lequel l'attache peut être insérée de façon amovible, l'élément d'articulation (22) de l'attache (20) étant disposé dans l'état inséré au-dessus de la surface (2') de la partie de base (2), **en ce que** le dispositif d'arrêt (30) présente un contre-palier (31) coopérant avec l'élément d'articulation (22) de l'attache (20), lequel palier peut être déplacé par un élément d'actionnement (33) dans ou sur la surface (2') de la partie de base (2) et peut être amené en contact actif avec l'élément d'articulation (22).

2. - Support universel selon la revendication 1, **caractérisé en ce qu'**un élément de guidage (27) de l'attache (20) peut être réceptionné dans l'élément de guidage (10) de la partie de guidage (2).

3. - Support universel selon l'une quelconque des revendications précédentes, **caractérisé en ce que** l'élément de guidage (10) présente une rainure de guidage (11).

4. - Support universel selon la revendication 3, **caractérisé en ce que** l'élément de guidage (27) de l'attache (20) peut être introduit dans la rainure de guidage (11) de la partie de base (2).

5. - Support universel selon l'une quelconque des revendications précédentes, **caractérisé en ce que** l'élément de guidage (10) présente deux rainures de guidage (11a, 11b) agencées sensiblement parallèlement et de préférence une autre rainure de guidage (11c) conçue en forme d'arc et reliant les deux autres rainures de guidage (11a, 11b).

6. - Support universel selon l'une quelconque des revendications précédentes, **caractérisé en ce que** le dispositif d'arrêt (30) présente un boulon de serrage (32) traversant la partie de base (2) et **en ce que** le boulon de serrage (32) porte le contre-palier (31) sur son extrémité supérieure et l'élément d'actionnement (33) sur son extrémité inférieure.

7. - Support universel selon l'une quelconque des revendications précédentes, **caractérisé en ce que** l'élément d'articulation (22) est conçu comme une articulation sphérique (23) et le contre-palier (31) comme une calotte de serrage (34).
